# FASCICULE DE BREVET EUROPEEN

(11) **EP 4 042 050 B1**
(45) Date de publication et mention de la délivrance du brevet: **25.01.2023**
(21) Numéro de dépôt: 20808440.0
(22) Date de dépôt: 24.11.2020
(51) Int. Cl.: F16L 21/00, F16L 21/02, F16L 21/03, F16L 53/32, F16L 17/02, F16L 25/12, F16L 37/12, F16L 37/133, F16L 37/138

(54) **CIRCUIT DE FLUIDE COMPRENANT UN RACCORD DE LIAISON POUR CANALISATIONS COMPRENANT UN ORGANE DE GUIDAGE POUR CONDUIT RÉCHAUFFEUR**
FLÜSSIGKEITSKREISLAUF MIT EINER ANSCHLUSSARMATUR FÜR ROHRE, MIT EINEM FÜHRUNGSELEMENT FÜR EINEN HEIZKANAL
FLUID CIRCUIT COMPRISING A CONNECTING FITTING FOR PIPES, COMPRISING A GUIDE MEMBER FOR A HEATER DUCT

(30) Priorité: 06.12.2019 FR 1913858
(43) Date de publication de la demande: 17.08.2022
(73) Titulaire: Airbus Atlantic, 17300 Rochefort (FR)
(72) Inventeur: PERHERIN, Daniel, 44600 Saint-Nazaire (FR)
(74) Mandataire: Argyma
(86) Numéro de dépôt international: PCT/EP2020/083201
(87) Numéro de publication internationale: WO 2021/110477

(56) Documents cités:
- WO-A1-2018/114342
- DE-U1- 29 911 104
- US-A- 4 031 611
- US-A1- 2005 139 278

## Description

### Domaine technique

La présente invention concerne le domaine des circuits de fluide dans un aéronef, par exemple, un circuit d'eau potable, d'eaux usées, de drainage, etc.

De manière connue, un circuit de fluide comporte une pluralité de canalisations reliées mécaniquement et fluidiquement entre elles. Lors de la mise en place d'un circuit de fluide dans un aéronef, les canalisations sont solidarisées de manière indépendante à la structure de l'aéronef puis raccordées entre elles fluidiquement. Autrement dit, les canalisations ne sont pas mobiles les unes par rapport aux autres mais fixes lors d'un raccordement.

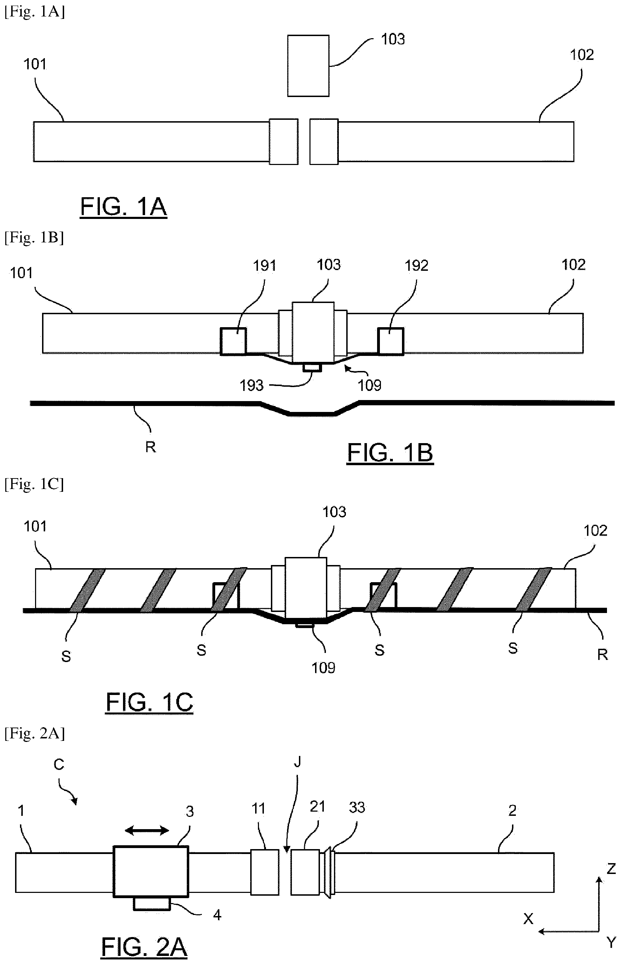

Comme représenté sur la [Fig.1A], pour raccorder une première canalisation 101 à une deuxième canalisation 102, il est connu d'utiliser un raccord de liaison 103 qui doit être monté à l'interface entre la première canalisation 101 et la deuxième canalisation 102 afin d'assurer un raccordement étanche. Un tel raccord de liaison peut par exemple être un collier métallique connu de l'art antérieur.

En outre, au cours d'un vol, les canalisations sont soumises à des températures inférieures à 0°C, température en dessous de laquelle l'eau gèle. Aussi, il est connu d'associer au circuit de fluide un conduit réchauffeur permettant de maintenir la température de l'eau dans les canalisations au-dessus de 0°C, de manière à limiter tout risque d'endommagement du circuit de fluide. Un tel conduit réchauffeur permet en outre de dégeler l'eau qui aurait pu stagner dans les canalisations, par exemple lorsqu'un avion reste au sol pendant une durée importante et que les températures extérieures sont basses.

Un tel conduit réchauffeur R est représenté sur les figures 1B et 1C et est de manière connue mis en contact avec les canalisations 101, 102 de manière à permettre un transfert thermique du conduit réchauffeur R vers les canalisations 101, 102. En pratique, le conduit réchauffeur R est fixé le long des canalisations 101, 102 au moyen d'une bande de ruban adhésif S positionnée en spirale, comme cela est représenté sur la [Fig.1C].

En pratique, le raccord de liaison 103, positionné entre les deux canalisations 101, 102, présente un diamètre supérieur au diamètre des canalisations 101, 102, comme illustré sur la [Fig.1B]. Autrement dit, le raccord de liaison 103 s'étend en saillie radiale des canalisations 101, 102, ce qui présente un inconvénient lors de la fixation du conduit réchauffeur R.

Afin de permettre également le réchauffement du raccord de liaison 103, il est connu d'utiliser un organe de guidage 109, monté de manière rapportée, permettant à la fois de positionner le conduit réchauffeur R le long des canalisations 101, 102 et de contourner la saillie formée par le raccord de liaison 103.

Un organe de guidage 109 connu de l'état de l'art, représenté sur les figures 1B et 1C, comporte un corps longitudinal et comprend à ses extrémités deux fourches de montage 191, 192 permettant de coopérer respectivement avec les deux canalisations 101, 102. Les fourches de montage 191, 192 présentent une forme sensiblement en U, de manière à coopérer avec les canalisations 101, 102, et comportent une cavité ouverte tournée vers le haut pour accueillir les canalisations 101, 102. Le corps longitudinal comporte une fourche centrale 193 comportant une cavité tournée vers le bas pour recevoir le conduit réchauffeur R. Le corps longitudinal possède une forme de V, de manière à guider le conduit réchauffeur R le long du raccord de liaison 103. Le corps longitudinal est métallique de manière à conduire la chaleur issue du conduit réchauffeur R au niveau de ses fourches de montage 191, 192 qui est ensuite transmise aux canalisations 101, 102.

Cependant, un tel organe de guidage 109 présente plusieurs inconvénients. En effet, un opérateur doit positionner un tel organe de guidage 109 rapporté au niveau de chaque raccord de liaison 103. Une telle opération est réalisée manuellement par un opérateur ce qui est pénible, chronophage et génère un montage imprécis. En outre, comme cela est représenté sur la [Fig.1C], un tel organe de guidage 109 rapporté contourne le raccord de liaison 103, ce qui a pour conséquence d'éloigner le conduit réchauffeur R du raccord de liaison 103. Le raccord de liaison 103, qui n'est pas en contact du conduit réchauffeur R du fait de l'organe de guidage 109, n'est ainsi pas chauffé de manière optimale, ce qui peut entrainer un givrage du raccord de liaison 103 en cas de températures basses.

On connait des documents US4031611A1 et DE29911104U1 des systèmes de fixation d'un élément chauffant à un tuyau. On connait également du document WO2018114342A1, un raccord de liaison monté entre deux canalisations. De manière incidente, on connait du document US2005139278, un système de drainage relié à une évacuation d'un évier ou d'un bac de vidange.

L'invention a pour but d'éliminer au moins certains de ces inconvénients en proposant un raccord de liaison et un procédé de mise en place qui sont simples, limitent les coûts et les délais d'installation tout en améliorant le chauffage.

### PRESENTATION DE L'INVENTION

L'invention concerne un circuit de fluide, en particulier pour aéronef, comprenant au moins une première canalisation, une deuxième canalisation et un raccord de liaison, chaque canalisation comportant une extrémité de connexion et s'étendant selon un axe X, le raccord de liaison, monté mobile entre les deux canalisations, étant configuré pour relier mécaniquement les deux extrémités de connexion.

Le raccord de liaison est remarquable en ce qu'il comprend un fourreau de liaison et un organe de guidage formé sur une surface extérieure du fourreau de liaison, l'organe de guidage, définissant un logement creux, étant configuré pour coopérer avec un conduit réchauffeur, de manière à le guider entre les deux canalisations, le conduit réchauffeur étant configuré pour transmettre de la chaleur aux canalisations et au raccord de liaison afin d'éviter leur givrage.

Le raccord de liaison selon l'invention présente l'avantage de permettre au moyen d'une pièce unique à la fois de raccorder deux canalisations et de guider le conduit réchauffeur dans un circuit de fluide. L'intégration de l'organe de guidage (non rapporté) directement sur le raccord de liaison permet avantageusement de limiter le nombre de pièces nécessaires pour le raccord et de faciliter la mise en place du conduit réchauffeur sans nécessiter d'outillage particulier. Aussi, un opérateur peut monter et fixer le raccord de liaison sur un circuit de fluide de manière plus rapide. Avantageusement, les délais et les coûts d'installation du raccord de liaison selon l'invention sont fortement réduits. De plus, l'organe de guidage permet le contact direct du conduit réchauffeur avec le raccord de liaison, permettant avantageusement d'améliorer les transferts thermiques avec le raccord de liaison qui est ainsi moins susceptible de givrer.

De préférence, le raccord de liaison est monté mobile sur la première canalisation, de manière à permettre un montage encore plus rapide dans un aéronef par simple coulissement du raccord de liaison le long de la première canalisation jusqu'à recouvrir les deux extrémités de connexion. Un tel montage permet également de limiter les surcontraintes dans les canalisations préalablement fixées à la structure de l'aéronef.

De préférence, l'organe de guidage du raccord de liaison est issu de matière du fourreau de liaison, permettant de limiter les efforts de liaison au niveau de la jonction entre les pattes de guidage et le fourreau de liaison. La fabrication d'une pièce d'un seul tenant permet en outre de limiter les contraintes qui pourraient apparaitre dans la pièce au niveau des interfaces. De plus, une telle configuration permet la fabrication d'une unique pièce, plus simple à stocker.

De plus, un organe de guidage issu de matière permet d'assurer une continuité de la matière dont le coefficient de dilatation thermique est inchangé. Aussi, une telle configuration permet avantageusement de s'affranchir de difficultés de transfert de chaleur entre un organe de guidage et un raccord de liaison distincts, limitant également les différences de dilatations dans des liaisons boulonnées par exemple. Les transferts thermiques avec le fourreau de liaison sont améliorés.

Selon une forme de réalisation, le raccord de liaison comprend un organe d'étanchéité, destiné à s'étendre entre les extrémités de connexion des canalisations, l'organe d'étanchéité étant positionné intérieurement audit fourreau de liaison.

De manière préférée, ledit organe d'étanchéité comprend un élément de positionnement s'étendant en saillie du fourreau de liaison dans le logement creux de l'organe de guidage, de manière à être en contact direct avec le conduit réchauffeur. Un tel élément de positionnement ainsi positionné dans le logement creux en contact direct du conduit réchauffeur permet la conduction de la chaleur dans l'organe d'étanchéité à l'intérieur du raccord de liaison. Comme l'organe d'étanchéité est en contact direct avec le fluide à conduire, les transferts thermiques du conduit réchauffeur au fluide sont améliorés.

De manière préférée, le fourreau de liaison comprenant une ouverture de positionnement, l'élément de positionnement de l'organe d'étanchéité s'étend radialement dans le logement creux, au travers de l'ouverture de positionnement. L'élément de positionnement permet ainsi de verrouiller le fourreau de liaison sur l'organe d'étanchéité permettant de limiter les mouvements involontaires de l'un par rapport à l'autre.

De préférence, l'élément de positionnement est issu de matière de l'organe d'étanchéité permettant de limiter les contraintes dues à des pièces rapportées.

Un élément de positionnement issu de matière de l'organe d'étanchéité permet également d'assurer le transfert de chaleur dans les extrémités de connexion, permettant avantageusement de limiter les risques de changement brusque de température pouvant conduire au givrage de l'eau sur les parois des canalisations au niveau des extrémités de connexion. Grâce à l'élément de positionnement en contact avec le conduit réchauffeur dans l'organe de guidage, les transferts de chaleur sont avantageusement améliorés.

De manière préférée, l'organe d'étanchéité est réalisé dans un matériau élastomère présentant l'avantage de rendre la connexion entre les deux canalisations étanche du fait des propriétés élastiques de l'élastomère.

Dans une forme de réalisation de l'invention, l'organe de guidage du raccord de liaison comprend au moins une première patte de guidage et une deuxième patte de guidage, permettant avantageusement d'assurer un guidage efficace du conduit réchauffeur.

De préférence, au moins la première patte de guidage est configurée pour s'étendre latéralement par rapport au conduit réchauffeur, de manière à assurer avantageusement la fonction de guidage du conduit réchauffeur par rapport aux canalisations. Un positionnement latéral permet de limiter les mouvements du conduit réchauffeur relativement aux canalisations par exemple en cas de vibrations du circuit de fluide.

De préférence, la deuxième patte de guidage est montée en vis-à-vis de la première patte de guidage, de manière à former le logement creux entre la première patte de guidage et la deuxième patte de guidage. Le conduit réchauffeur est ainsi avantageusement maintenu en place latéralement dans toutes les directions. De préférence, la deuxième patte de guidage est configurée pour s'étendre également latéralement par rapport au conduit réchauffeur. Par vis-à-vis, on entend que les pattes de guidage peuvent être positionnées à une même position axiale ou décalées axialement.

Dans une forme de réalisation de l'invention, au moins la première patte de guidage présente une forme en L, de manière à la fois à guider et à supporter le conduit réchauffeur. Une forme en L permet avantageusement de maintenir en place le conduit réchauffeur au niveau du raccord de liaison. La forme en L permet de soutenir localement le conduit réchauffeur, permettant de faciliter l'installation d'un conduit réchauffeur sur un circuit de fluide. Ainsi, les délais et les coûts d'installation sont fortement réduits. Une telle forme en L permet en outre le plaquage du conduit réchauffeur contre le raccord de liaison, permettant d'améliorer les transferts thermiques.

De préférence, la première patte de guidage et la deuxième patte de guidage présentent une forme en L. Le logement creux formé par les pattes de guidage en L permet en outre de coulisser le conduit réchauffeur dans l'axe des canalisations, limitant avantageusement des surcontraintes liées par exemple à des fixations du conduit réchauffeur sur le raccord de liaison.

De manière préférée, la première patte de guidage et la deuxième patte de guidage sont configurées pour s'écarter l'une de l'autre de manière élastique, de manière à permettre l'insertion du conduit réchauffeur. Une telle configuration permet un montage simple et rapide par la simple poussée du conduit réchauffeur contre les parois des pattes de guidage, entrainant l'écartement des pattes de guidage l'une de l'autre. Aussi, une simple poussée du conduit réchauffeur permet par clippage dans le logement creux de positionner et maintenir en place le conduit réchauffeur.

De préférence, l'organe de guidage est réalisé en matériau thermoplastique, permettant d'assurer une souplesse des pattes de guidage, permettant leur écartement relatif sans nécessiter d'outillage spécifique.

Selon une forme de réalisation, le raccord de liaison comprend un organe de verrouillage fixé à la deuxième canalisation et configuré pour coopérer avec le fourreau de liaison, de manière à permettre la fixation du fourreau de liaison et de l'organe d'étanchéité entre les deux extrémités de connexion, permettant d'assurer une liaison étanche entre la première canalisation et la deuxième canalisation.

L'invention concerne également un ensemble d'un circuit de fluide tel que décrit précédemment et d'un conduit réchauffeur, monté dans ledit logement creux de l'organe de guidage du raccord de liaison.

L'invention a également pour objet un aéronef comprenant au moins un ensemble d'un circuit de fluide et d'un conduit réchauffeur tel que décrit précédemment.

Enfin, l'invention se rapporte à un procédé de mise en place d'un conduit réchauffeur dans un circuit de fluide tel que décrit précédemment, ledit procédé comprenant :
- une étape de fixation du raccord de liaison entre les extrémités de connexion des canalisations, et
- une étape d'insertion du conduit réchauffeur dans le logement creux de l'organe de guidage, de manière à permettre une coopération intime entre le raccord de liaison et le conduit réchauffeur.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La [Fig.1A], la [Fig.1B] et la [Fig.1C] sont des représentations schématiques d'un circuit de fluide selon l'art antérieur et d'un conduit réchauffeur fixé sur un tel circuit de fluide au moyen d'un organe de guidage de l'art antérieur.
La [Fig.2A] et la [Fig.2B] sont des représentations schématiques d'un circuit de fluide connecté au moyen d'un raccord de liaison selon l'invention.
La [Fig.3] est une représentation schématique d'un raccord de liaison des figures 2A et 2B comprenant un organe de guidage selon une première forme de réalisation de l'invention.
La [Fig.4] est une vue en coupe longitudinale du raccord de liaison de la [Fig.3].
La [Fig.5] est une vue en coupe transversale du raccord de liaison de la [Fig.3].
La [Fig.6] est une vue en coupe transversale d'un raccord de liaison comprenant un organe de guidage selon une deuxième forme de réalisation de l'invention.
La [Fig.7A] et la [Fig.7B] sont des représentations schématiques d'un raccord de liaison selon une troisième forme de réalisation de l'invention.
La [Fig.8A] et la [Fig.8B] sont des représentations schématiques d'un raccord de liaison selon une quatrième forme de réalisation de l'invention ;
La [Fig.9A] et la [Fig.9B] sont des représentations schématiques d'un raccord de liaison comprenant un élément de positionnement selon une forme de réalisation de l'invention.
La [Fig.10] est une représentation schématique des étapes d'un procédé de mise en place d'un raccord de liaison et d'un conduit réchauffeur sur un circuit de fluide selon un mode de mise en oeuvre de l'invention.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

Il va être présenté un circuit de fluide selon l'invention destiné à être monté dans un aéronef, en particulier pour le transport d'eau, cependant il va de soi que le circuit de fluide pourrait tout aussi bien permettre le transport d'un fluide différent, tel que du carburant ou des gaz.

En particulier, le circuit de fluide selon l'invention décrit dans ce document fonctionne généralement en dépression, c'est-à-dire que la pression à l'intérieur du circuit de fluide est inférieure à la pression atmosphérique, permettant la circulation d'un fluide dans le circuit de fluide.

Dans cet exemple, le circuit de fluide comprend une pluralité de canalisations qui sont raccordées les unes avec les autres afin de guider un fluide. Pour une application aéronautique, les canalisations individuelles sont, dans un premier temps, solidarisées à une structure d'un aéronef puis, dans un deuxième temps, raccordées entre elles par le déplacement de raccords de liaison.

Par la suite, l'invention va être présentée pour le raccordement de deux canalisations d'un circuit de fluide. Néanmoins, l'invention s'applique également au raccordement de plus de deux canalisations.

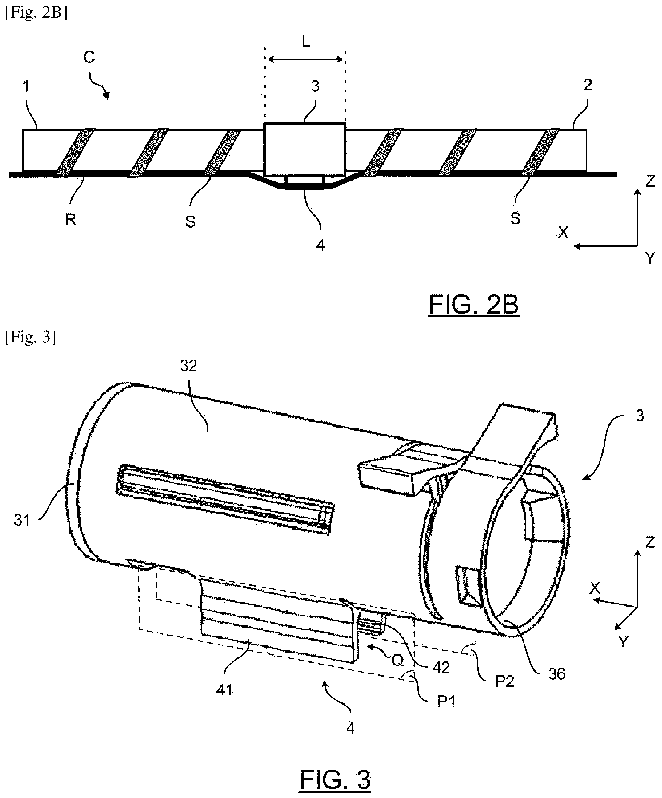

En référence aux figures 2A et 2B, il est représenté un circuit de fluide C selon une forme de réalisation de l'invention. Le circuit de fluide C comprend une première canalisation 1, une deuxième canalisation 2, montées en vis-à-vis l'une de l'autre, et un raccord de liaison 3, destiné à être monté à l'interface entre la première canalisation 1 et la deuxième canalisation 2, afin de les raccorder fluidiquement.

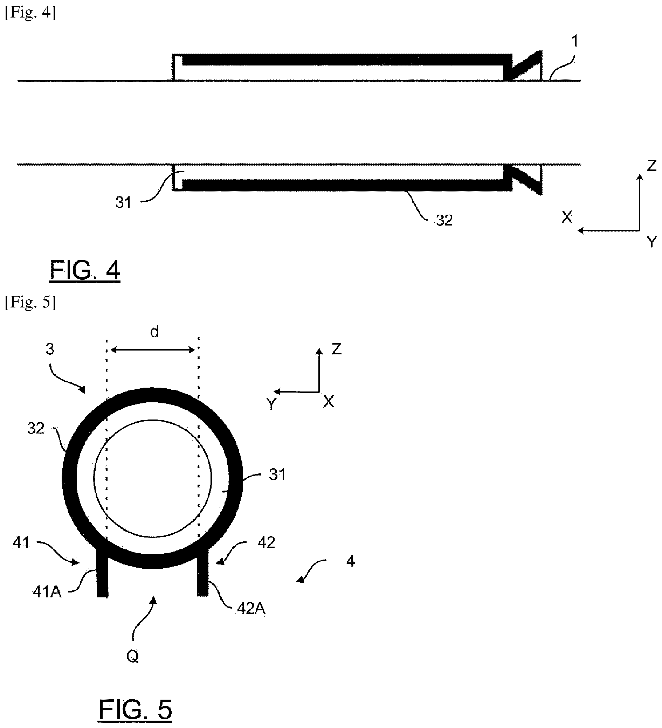

Dans cet exemple, le circuit de fluide C s'étend longitudinalement selon un axe X, transversalement selon un axe Y et verticalement selon un axe Z, de manière à former un repère orthogonal (X, Y, Z). Aussi, le terme vertical décrit un objet s'étendant dans le plan (Y, Z) et le terme horizontal, un objet s'étendant dans le plan (X, Y). De plus, les termes « bas » et « haut » se réfèrent à l'axe Z qui s'étend verticalement du bas vers le haut. De manière incidente, les termes « gauche » et « droite » se réfèrent à l'axe Y qui s'étend horizontalement de la droite vers la gauche, sur une vue de face, c'est-à-dire une vue positionnée dans l'axe longitudinal des canalisations 1, 2 (comme représenté sur la [Fig.5]).

Dans cette forme de réalisation, chaque canalisation 1, 2 comporte un corps tubulaire qui est terminé à chaque extrémité par un embout de connexion. Ainsi, chaque embout de connexion forme une extrémité de connexion 11, 21 de la canalisation 1, 2. De plus, chaque canalisation 1, 2 définit une surface intérieure, en contact avec le fluide à conduire, et une surface extérieure, opposée à la surface intérieure.

Aussi, comme représenté sur la [Fig.2A], la première canalisation 1 et la deuxième canalisation 2, espacées d'un jeu d'écartement J, comportent respectivement une première extrémité de connexion 11 et une deuxième extrémité de connexion 21, chacune des deux extrémités de connexion 11, 21 étant destinée à coopérer avec le raccord de liaison 3. Autrement dit, le raccord de liaison 3 permet de connecter les deux canalisations 1, 2 qui sont écartées.

En référence à la [Fig.2B], le raccord de liaison 3 est destiné à être monté entre la première canalisation 1 et la deuxième canalisation 2, de manière à raccorder fluidiquement les deux canalisations 1, 2. Un tel positionnement sera désigné par la suite « position de montage ». Autrement dit, le raccord de liaison 3 selon l'invention est configuré pour relier mécaniquement les extrémités de connexion 11, 21 des canalisations 1, 2. De manière préférée, le raccord de liaison 3 est prémonté sur l'une des canalisations 1, 2 du circuit de fluide C et est mobile sur celle-ci, comme cela est représenté sur la [Fig.2A]. Dans cet exemple, le raccord de liaison 3 est prémonté coulissant le long de la première canalisation 1.

Un prémontage permet de manière avantageuse de positionner le raccord de liaison 3 lors de la fixation des canalisations 1, 2 à une structure aéronef, ce qui procure un gain de temps important. De plus, la connexion entre la première canalisation 1 et la deuxième canalisation 2 en est simplifiée comme cela sera présenté par la suite. Il va néanmoins de soi que le raccord de liaison 3 pourrait être monté postérieurement.

Dans cet exemple, le raccord de liaison 3 présente une longueur L selon l'axe X longitudinal comprise entre 50 et 65 mm, de manière à recouvrir entièrement le jeu d'écartement J et les deux extrémités de connexion 11, 21, tout en assurant la connexion fluidique entre la première canalisation 1 et la deuxième canalisation 2, comme illustré à la [Fig.2B].

Selon une forme de réalisation de l'invention, en référence aux figures 3 à 5, le raccord de liaison 3 comprend un organe d'étanchéité 31, destiné à s'étendre entre les extrémités de connexion 11, 21, un fourreau de liaison 32, destiné à recouvrir l'organe d'étanchéité 31, et un organe de verrouillage 33 (représenté sur la [Fig.2A]), destiné à verrouiller le fourreau de liaison 32 et l'organe d'étanchéité 31 en position de montage entre les extrémités de connexion 11, 21, de manière à interdire tout déplacement involontaire.

En référence aux figures 3 et 4, l'organe d'étanchéité 31 s'étend longitudinalement selon l'axe X. A ce titre, l'organe d'étanchéité 31 présente dans cet exemple la forme d'un cylindre creux de manière à coopérer avec les canalisations 1, 2. L'organe d'étanchéité 31 comprend une surface radiale extérieure et une surface radiale intérieure, opposée à la surface radiale extérieure et destinée à coopérer avec les extrémités de connexion 11, 21. De préférence, la surface radiale intérieure de l'organe d'étanchéité 31 présente un diamètre sensiblement égal au diamètre des extrémités de connexion 11, 21, de manière à assurer l'étanchéité du raccord de liaison 3.

Dans cet exemple, l'organe d'étanchéité 31 est réalisé dans un matériau élastomère, permettant de rendre la connexion entre les deux canalisations 1, 2 étanche. En effet, les propriétés élastiques d'un tel matériau permettent à l'organe d'étanchéité 31 de remplir le rôle d'un joint étanche en plaquant l'organe d'étanchéité 31 contre la surface radiale extérieure des canalisations 1, 2.

Comme cela est représenté sur la [Fig.3], le fourreau de liaison 32 présente la forme d'un cylindre creux de manière à coopérer avec l'organe d'étanchéité 31. Le fourreau de liaison 32 comprend une surface radiale extérieure et une surface radiale intérieure, opposée à la surface radiale extérieure et destinée à coopérer avec la surface radiale extérieure de l'organe d'étanchéité 31. De préférence, la surface radiale intérieure du fourreau de liaison 32 présente un diamètre sensiblement égal au diamètre de la surface radiale extérieure de l'organe d'étanchéité 31. Autrement dit, le fourreau de liaison 32 est positionné de manière à former une enveloppe pour l'organe d'étanchéité 31.

Selon un exemple de réalisation, le fourreau de liaison 32 est réalisé dans un matériau thermoplastique, sa masse et son coût sont alors fortement réduits, ce qui est avantageux.

Dans cet exemple, le fourreau de liaison 32 comprend un dispositif de fixation 36 configuré pour coopérer avec l'organe de verrouillage 33, solidaire de la deuxième canalisation 2, de manière à verrouiller le fourreau de liaison 32 et l'organe d'étanchéité 31 entre les extrémités de connexion 11, 21.

Ce document présente l'exemple d'un raccord de liaison 3 comprenant un fourreau de liaison 32 monté sur un organe d'étanchéité 31, cependant il va de soi que le raccord de liaison 3 pourrait tout aussi bien comprendre uniquement un fourreau de liaison 32, monté directement sur les canalisations 1, 2 et configuré pour connecter les extrémités de connexion 11, 12. Dans une telle configuration, la surface radiale intérieure du fourreau de liaison 32 présenterait un diamètre sensiblement égal au diamètre des extrémités de connexion 11, 12, de manière à assurer l'étanchéité du raccord de liaison 3

Comme illustré à la [Fig.2B], le raccord de liaison 3 comprend un organe de guidage 4 configuré pour guider un conduit réchauffeur R entre les deux canalisations 1, 2. Le conduit réchauffeur R est configuré pour transmettre de la chaleur aux canalisations 1, 2 et au raccord de liaison 3 afin d'éviter leur givrage. Aussi, l'organe de guidage 4 selon l'invention permet également de positionner le conduit réchauffeur R en contact direct avec le raccord de liaison 3, de manière à optimiser les échanges thermiques. Dans cet exemple, le conduit réchauffeur R présente dans le plan transversal (Y, Z) une section sensiblement rectangulaire, de manière à permettre le réchauffement d'une surface de canalisation plus importante. Le conduit réchauffeur R présente une largeur, c'est-à-dire une dimension suivant l'axe transversal Y en position de montage, comprise entre 7,8 et 11,8 mm, de préférence 9,8 mm.

Le conduit réchauffeur R s'étend longitudinalement selon l'axe X le long des canalisations 1, 2. Dans cet exemple, par souci de clarté, le conduit réchauffeur R est configuré pour être positionné sous les canalisations 1, 2, comme cela est représenté sur la [Fig.2B]. Cependant, il va de soi que le conduit réchauffeur R pourrait tout aussi bien être positionné au-dessus des canalisations ou dans toute position permettant d'accoler le conduit réchauffeur R le long des canalisations 1, 2.

En référence aux figures 3 et 4, l'organe de guidage 4 est formé sur la surface radiale extérieure du fourreau de liaison 32. Dans cet exemple, l'organe de guidage 4 s'étend longitudinalement selon l'axe X au niveau d'une extrémité inférieure du fourreau de liaison 32 lorsque le raccord de liaison 3 est en position de montage, de manière à pourvoir recevoir le conduit réchauffeur R.

De préférence, l'organe de guidage 4 est issu de matière du fourreau de liaison 32, permettant avantageusement de limiter les contraintes de liaison à la jonction entre l'organe de guidage 4 et le fourreau de liaison 32. Cela permet en outre de favoriser les échanges thermiques. L'intégration d'un organe non rapporté permet également avantageusement de simplifier l'installation d'un raccord de liaison 3 sur le circuit de fluide C. De plus, l'installation est plus rapide et ne nécessite pas de fixation préalable. Ainsi les délais et les coûts d'installation du raccord de liaison 3 selon l'invention sont fortement réduits.

Comme cela est représenté sur la [Fig.3], dans une première forme de réalisation de l'invention, l'organe de guidage 4 comprend deux pattes de guidage 41, 42 s'étendant longitudinalement selon l'axe X. Les deux pattes de guidage 41, 42 s'étendent sensiblement sur la moitié de la longueur du raccord de liaison 3, de manière à former une surface de support suffisante pour le conduit réchauffeur R.

En référence à la [Fig.5], les deux pattes de guidage 41, 42 sont configurées pour s'étendre latéralement de préférence de part et d'autre du conduit réchauffeur R. Autrement dit, en position de montage, une première patte de guidage 41 s'étend à gauche du conduit réchauffeur R et une deuxième patte de guidage 42 s'étend à droite du conduit réchauffeur R.

Pour cela, chaque patte de guidage 41, 42 comprend une paroi latérale 41A, 42A sensiblement horizontale, c'est-à-dire s'étendant dans un plan P1, P2 parallèle au plan (X, Y), lorsque le raccord de liaison 3 est en position de montage. Dans cet exemple, les deux pattes de guidage 41, 42 sont positionnées en vis-à-vis l'une de l'autre, de manière à ménager un logement creux Q, permettant de recevoir le conduit réchauffeur R. Chaque patte de guidage 41, 42 est, dans cet exemple, formée d'une unique paroi latérale 41A, 42A.

De préférence, les parois latérales 41A, 42A sont espacées, suivant l'axe transversal Y, d'une distance d'écartement d comprise entre 8 et 12 mm, de préférence 10mm, de manière à permettre le passage du conduit réchauffeur R.

L'organe de guidage 4 permet avantageusement de guider le conduit réchauffeur R lorsque celui-ci est monté sur le circuit de fluide C. L'organe de guidage 4 directement intégré au raccord de liaison 3 permet avantageusement de mettre en contact direct le conduit réchauffeur R et le raccord de liaison 3, de manière à augmenter les transferts de chaleur vers le raccord de liaison 3, permettant d'améliorer le réchauffement du raccord de liaison 3. L'organe de guidage 4 selon l'invention permet en outre une installation simple et rapide du conduit réchauffeur R en s'affranchissant de l'utilisation d'un élément supplémentaire rapporté.

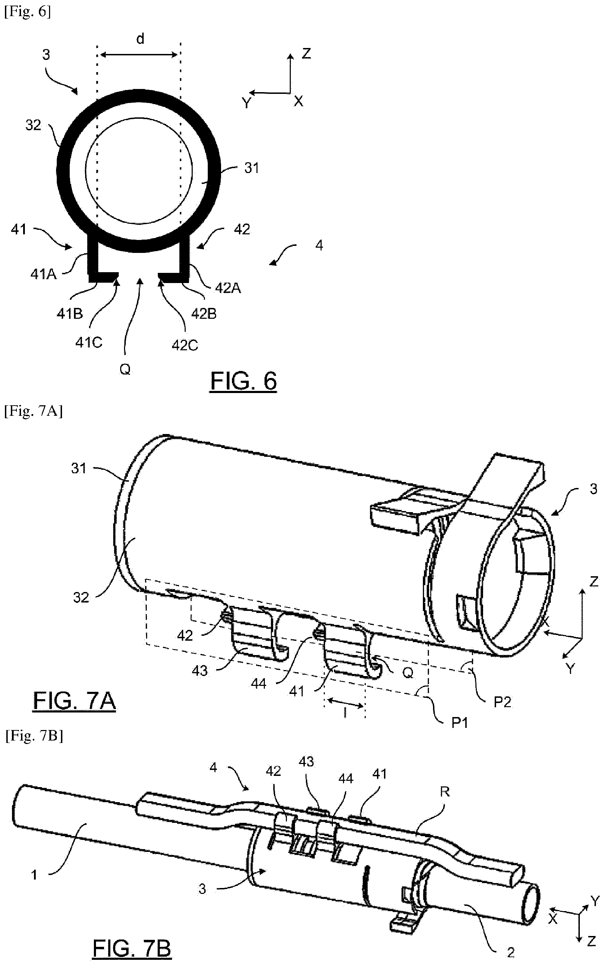

Dans une deuxième forme de réalisation, en référence à la [Fig.6], les deux pattes de guidage 41, 42 présentent, dans le plan transversal (Y, Z), une forme en L. A ce titre, chaque patte de guidage 41, 42 comprend une paroi latérale 41A, 42A s'étendant sensiblement dans un plan P1, P2 parallèle au plan (X, Z) et une paroi de fond 41B, 42B sensiblement horizontale, c'est-à-dire s'étendant dans un plan parallèle au plan (X, Y), lorsque le raccord de liaison 3 est en position de montage. Chaque paroi de fond 41B, 42B permet de plaquer le conduit réchauffeur R de manière intime contre le fourreau de liaison 32.

Dans cet exemple, les deux pattes de guidage 41, 42 positionnées en vis-à-vis l'une de l'autre, ménagent un logement creux Q entre l'ensemble des parois latérales 41A, 42A et des parois de fond 41B, 42B. Chaque patte de guidage 41, 42 formant un L, chaque paroi de fond 41B, 42B comprend une extrémité libre 41C, 42C. Les deux extrémités libres 41C, 42C positionnées en vis-à-vis l'une de l'autre forment une ouverture de passage entre les deux parois de fond 41B, 42B permettant l'accès au logement creux Q.

De préférence, chaque paroi des pattes de guidage 41, 42 est élastique, de manière à conserver une souplesse permettant avantageusement d'écarter les pattes de guidage 41, 42 l'une par rapport à l'autre. Dans cet exemple, chaque paroi présente une épaisseur comprise entre 1 et 2 mm.

En effet, les pattes de guidage 41, 42 sont configurées pour s'écarter l'une de l'autre à partir d'une position initiale, de manière à être placées dans une position de passage du conduit réchauffeur R. Pour cela, en référence à la [Fig.6], chaque paroi de fond 41B, 42B comprend de préférence à son extrémité libre 41C, 42C un bord oblique configuré pour permettre le glissement du conduit réchauffeur R lors de l'insertion de celui-ci dans le logement creux Q, via l'ouverture de passage. Les bords obliques sont convergents vers le fourreau de liaison 32.

En pratique, lorsque le conduit réchauffeur R est poussé radialement contre les bords obliques des parois de fond 41B, 42B dans l'ouverture de passage, les pattes de guidage 41, 42 sont configurées pour s'écarter l'une de l'autre sous l'effet de la tension selon l'axe transversal Y de manière à agrandir l'ouverture de passage et permettre ainsi l'insertion du conduit réchauffeur R dans le logement creux Q. Les pattes de guidage 41, 42 sont en outre configurées pour être replacées dans leur position initiale lorsque le conduit réchauffeur R est positionné dans le logement creux Q, du fait de leur élasticité, comme cela sera décrit plus en détails par la suite. Ce document présente l'exemple d'une extrémité libre 41C, 42C présentant un bord oblique, cependant il va de soi que les extrémités libres 41C, 42C pourraient tout aussi bien comprendre des bords droits.

L'organe de guidage 4 selon cette deuxième forme de réalisation permet avantageusement de guider et de supporter le conduit réchauffeur R lorsque celui-ci est monté sur le circuit de fluide C, tout en le plaquant contre le raccord de liaison 3, de manière à augmenter les transferts de chaleur vers le raccord de liaison 3. Dans cet exemple, le conduit réchauffeur R présente une forme rectangulaire, comme décrit précédemment. Aussi, la forme de l'organe de guidage 4 et notamment du logement creux Q, formé par les deux pattes de guidage 41, 42 en L, permet un maintien optimal du conduit réchauffeur R par complémentarité de formes.

Dans une troisième forme de réalisation de l'invention, représentée sur les figures 7A et 7B, l'organe de guidage 4 comprend quatre pattes de guidage 41, 42, 43, 44 présentant chacune une forme en L et s'étendant de manière similaire aux deux pattes de guidage 41, 42 décrites dans la forme de réalisation précédente, c'est-à-dire dans deux plans P1, P2 parallèles au plan (X, Z). Autrement dit, deux pattes de guidage 41, 43 s'étendent dans un premier plan P1 et deux pattes de guidage 42, 44 s'étendent dans un deuxième plan P2, de manière à répartir les pattes de guidage 41, 42, 43, 44 de part et d'autre du conduit réchauffeur R lorsque celui-ci est en position de montage. De préférence, les quatre pattes de guidage 41, 42, 43, 44 sont positionnées longitudinalement alternativement dans le premier plan P1 et dans le deuxième plan P2, de manière à assurer un maintien efficace de part et d'autre du conduit réchauffeur R. Autrement dit les pattes de guidage 41, 42, 43, 44 sont disposées de manière alternée à droite et à gauche du conduit réchauffeur R, comme cela est représenté sur la [Fig.7B].

Dans cet exemple, comme cela est représenté sur la [Fig.7A], chaque patte de guidage 41, 42, 43, 44 présente une longueur 1 s'étendant selon l'axe X comprise entre 5 et 15 mm, de préférence égale à 10 mm. Aussi, le raccord de liaison 3 présenté dans cette forme de réalisation est plus léger, ce qui présente un avantage important compte tenu du nombre de raccord de liaison 3 nécessaire dans un circuit de fluide C complet d'un aéronef et compte tenu des contraintes de masses connues dans le domaine aéronautique.

Les quatre pattes de guidage 41, 42, 43, 44 sont ainsi réparties afin de supporter de manière efficace et équilibrée le conduit réchauffeur R, tout en limitant la masse du raccord de liaison 3.

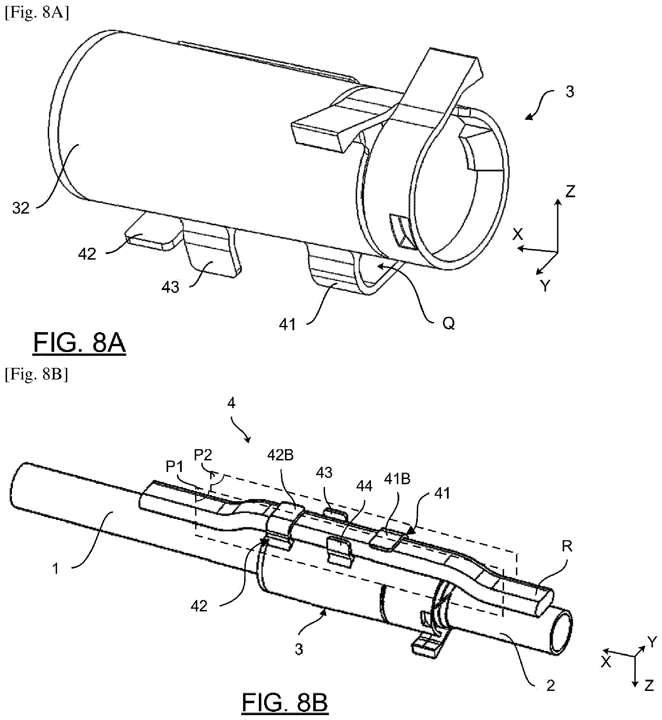

Selon une quatrième forme de réalisation de l'invention, représentée sur les figures 8A et 8B, l'organe de guidage 4 comprend quatre pattes de guidage 41, 42, 43, 44 s'étendant alternativement à droite et à gauche du conduit réchauffeur R, de manière similaire à la forme de réalisation décrite précédemment. Autrement dit, les quatre pattes de guidage 41, 42, 43, 44 s'étendent longitudinalement alternativement à droite et à gauche du conduit réchauffeur R, de manière à assurer un maintien efficace lorsque celui-ci est en position de montage. Dans cet exemple, deux pattes de guidage 41, 42 présentent la forme d'un L et remplissent une fonction de guidage et support du conduit réchauffeur R, permettant également le plaquage du conduit réchauffeur R contre le raccord de liaison 3, et deux pattes de guidage 43, 44 comprennent une unique paroi latérale et remplissent uniquement une fonction de guidage du conduit réchauffeur R.

Les deux pattes de guidage 41, 42 présentant la forme d'un L s'étendent chacune dans un plan P1, P2 distinct et comprennent une paroi de fond 41B, 42B s'étendant sensiblement selon l'axe transversal Y sur toute la largeur du conduit réchauffeur R. Autrement dit, dans cet exemple, les parois de fond 41B, 42B présentent une longueur s'étendant transversalement au conduit réchauffeur R, c'est-à-dire suivant l'axe Y, plus grande que la longueur des parois de fond 41B, 42B présentées dans la troisième forme de réalisation, de manière à supporter l'intégralité de la largeur du conduit réchauffeur R. Aussi, lorsqu'il est dans sa position de montage, le conduit réchauffeur R est maintenu fixement en place. Dans cet exemple, les parois de fond 41B, 42B présentent une longueur comprise entre 10 et 15 mm.

Les deux pattes de guidage 43, 44 comprenant une unique paroi latérale sont positionnées dans cet exemple longitudinalement entre les deux pattes de guidage 41, 42 présentant la forme d'un L et permettent de guider le conduit réchauffeur R le long du raccord de liaison 3.

Aussi, le raccord de liaison 3 présenté dans cette forme de réalisation est léger et permet un guidage, un support et un plaquage efficace du conduit réchauffeur R.

Le raccord de liaison 3 selon l'invention permet avantageusement de connecter deux canalisations 1, 2 du circuit de fluide C tout en guidant le conduit réchauffeur R lorsque celui-ci est monté. L'organe de guidage 4 intégré au raccord de liaison 3 permet en outre une installation simple et rapide du conduit réchauffeur R en s'affranchissant de l'utilisation de pièces supplémentaires. L'organe de guidage 4 dans lequel les pattes de guidage 41, 42 comprennent une paroi de fond 41B, 42B permet en outre avantageusement de supporter le conduit réchauffeur R et de le maintenir en place sans ajouter de pièce supplémentaire.

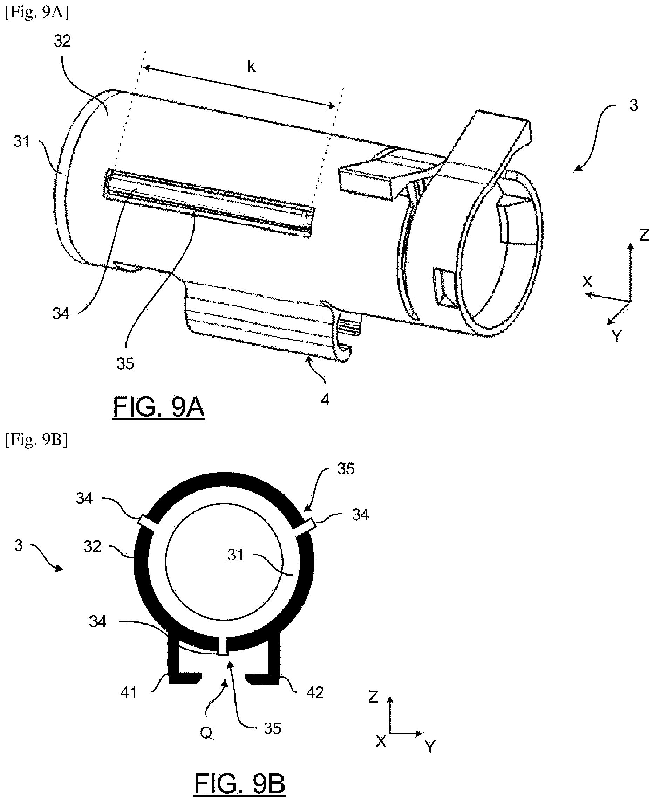

Selon une forme de réalisation de l'invention, en référence aux figures 9A et 9B, afin de faciliter le transfert de chaleur du conduit réchauffeur R vers le raccord de liaison 3, l'organe d'étanchéité 31 comprend au moins un élément de positionnement 34 s'étendant en saillie radiale depuis la surface radiale extérieure de l'organe d'étanchéité 31. Un tel élément de positionnement 34 permet de solidariser l'organe d'étanchéité 31 et le fourreau de liaison 32 lors d'un déplacement du raccord de liaison 3 selon l'axe X.

Dans cette forme de réalisation, comme illustré sur la [Fig.9B], l'organe d'étanchéité 31 comporte plusieurs éléments de positionnement 34 répartis angulairement. De manière préférée, chaque élément de positionnement 34 s'étend longitudinalement selon l'axe X, comme illustré sur la [Fig.9A].

En particulier, dans cet exemple, l'organe d'étanchéité 31 comprend trois éléments de positionnement 34 s'étendant selon des directions parallèles qui sont en outre parallèles à l'axe X longitudinal du raccord de liaison 3 et sont répartis circonférentiellement sur la surface radiale extérieure de l'organe d'étanchéité 31 à équidistance les uns des autres. Chaque élément de positionnement 34 est issu de matière de l'organe d'étanchéité 31, de manière à limiter les contraintes de liaisons entre plusieurs pièces indépendantes. Dans cet exemple, chaque élément de positionnement 34 s'étend longitudinalement sur une longueur k comprise entre 23 et 33 mm.

Dans cette forme de réalisation préférée de l'invention, toujours en référence aux figures 9A et 9B, le fourreau de liaison 32 comprend au moins une ouverture de positionnement 35 traversant l'épaisseur du fourreau de liaison 32. Une telle ouverture de positionnement 35 est configurée pour coopérer avec l'élément de positionnement 34 de l'organe d'étanchéité 31.

Dans cette forme de réalisation, le fourreau de liaison 32 comporte plusieurs ouvertures de positionnement 35 répartis angulairement. De manière préférée, chaque ouverture de positionnement 35 s'étend longitudinalement selon l'axe X.

En particulier, dans cet exemple, le fourreau de liaison 32 comprend trois ouvertures de positionnement 35 s'étendant selon des directions parallèles qui sont en outre parallèles à l'axe X longitudinal du raccord de liaison 3 et sont réparties circonférentiellement sur le fourreau de liaison 32 à équidistance les unes des autres. Chaque ouverture de positionnement 35 s'étend longitudinalement selon l'axe X sur une longueur comprise entre 23 et 33 mm, de manière à permettre leur coopération avec les éléments de positionnement 34.

En effet, toujours en référence à la [Fig.9A], les éléments de positionnement 34 de l'organe d'étanchéité 31 sont configurés pour s'insérer dans les ouvertures de positionnement 35 ménagées dans le fourreau de liaison 32, de manière à solidariser les deux pièces et ainsi maintenir le fourreau de liaison 32 en position sur l'organe d'étanchéité 31 en cas de translation du fourreau de liaison 32 selon l'axe X ou de rotation autour dudit axe X.

Dans cet exemple, au moins un élément de positionnement 34 s'étend dans le logement creux Q et est configuré pour être mis en contact avec le conduit réchauffeur R lorsque celui-ci est monté. Une telle configuration permet avantageusement le contact direct du conduit réchauffeur R avec l'organe d'étanchéité 31. Aussi, l'élément de positionnement 34 permet de chauffer directement l'organe d'étanchéité 31 et donc l'intérieur du raccord de liaison 3, sans nécessiter le chauffage préalable du fourreau de liaison 32, qui est en matériau thermoplastique. Le réchauffement du raccord de liaison 3 est alors avantageusement plus rapide et plus efficace.

Dans un exemple de positionnement représenté sur la [Fig.9B], le fourreau de liaison 32 comprend une extrémité inférieure orientée vers le bas en référence au repère (X, Y, Z). De manière préférée, l'une des ouvertures de positionnement 35 s'étend sensiblement au niveau de l'extrémité inférieure du fourreau de liaison 32 de manière à permettre le passage d'un élément de positionnement 34 vers le bas en saillie de la surface radiale extérieure du fourreau de liaison 32 dans le logement creux Q.

Un tel positionnement permet le contact direct de l'organe d'étanchéité 31, qui est lui-même en contact direct avec le fluide, avec le conduit réchauffeur R, permettant de diffuser la chaleur issue du conduit réchauffeur R, permettant de limiter les risques de givrage dans le raccord de liaison 3. Autrement dit, dans une telle forme de réalisation de l'invention, le raccord de liaison 3 permet avantageusement d'augmenter les échanges thermiques entre le conduit réchauffeur R et le raccord de liaison 3, par comparaison avec la forme de réalisation de l'art antérieur dans laquelle le raccord de liaison 3 n'était pas en contact direct avec le conduit réchauffeur R.

Le raccord de liaison 3 selon l'invention permet de relier fluidiquement les deux canalisations 1, 2 et de rendre la liaison étanche, tout en optimisant les transferts de chaleur issus d'un conduit réchauffeur R. L'organe de guidage 4 qui est formé sur le fourreau de liaison 32 permet avantageusement, du fait de son intégration au raccord de liaison 3, de guider le conduit réchauffeur R tout en le plaquant contre le raccord de liaison 3 afin d'éviter son givrage. En outre, le raccord de liaison 3 selon l'invention comporte un nombre limité d'éléments, ce qui diminue son coût. De plus, de manière avantageuse, chaque élément peut être réalisé à bas coût, en particulier, par injection plastique, ce qui réduit notamment sa masse.

Il va dorénavant être présenté un procédé d'installation d'un raccord de liaison 3 et d'un conduit réchauffeur R sur le circuit de fluide C selon un mode de mise en oeuvre de l'invention au moyen d'un raccord de liaison 3 selon la première forme de réalisation décrite précédemment. Dans un tel procédé, le raccord de liaison 3 permet le raccord entre une première canalisation 1 et une deuxième canalisation 2, montées en vis à vis l'une de l'autre. Dans cet exemple, les canalisations 1, 2 ont été préalablement solidarisées à une structure d'un aéronef et ne sont pas mobiles les unes par rapport aux autres. Dans cet exemple, le raccord de liaison 3 est prémonté sur la première canalisation 1 comme cela est décrit précédemment.

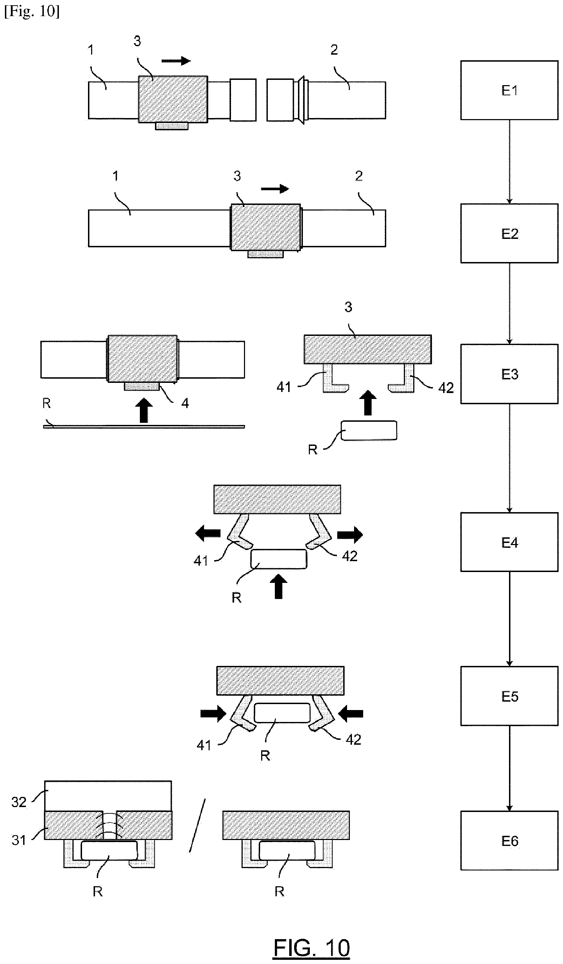

En référence à la [Fig.10], le procédé comprend une première étape de positionnement E1, par un opérateur, du raccord de liaison 3 en vis-à-vis des deux extrémités de connexion 11, 21. Dans un mode de mise en oeuvre, l'opérateur coulisse l'organe d'étanchéité 31 et le fourreau de liaison 32 du raccord de liaison 3 le long de la première canalisation 1 en direction de la deuxième canalisation 2, c'est-à-dire selon l'axe X longitudinal. Autrement dit, le raccord de liaison 3 est approché de la deuxième canalisation 2 et recouvre progressivement la première extrémité de connexion 11 puis la deuxième extrémité de connexion 21, de manière à recouvrir les deux extrémités de connexion 11, 21, recouvrant ainsi le jeu d'écartement J entre les deux canalisations 1, 2, permettant un raccord étanche.

Le positionnement du raccord de liaison 3 permet de mettre en contact le dispositif de fixation 36 du fourreau de liaison 32 avec l'organe de verrouillage 33, solidaire de la deuxième canalisation 2. La coopération du dispositif de fixation 36 avec l'organe de verrouillage 33 permet ainsi de fixer, dans une étape de fixation E2, le raccord de liaison 3 à la jonction entre les deux canalisations 1, 2.

Le procédé comprend ensuite une étape de positionnement E3 d'un conduit réchauffeur R en vis-à-vis de l'organe de guidage 4 du raccord de liaison 3. L'opérateur pousse alors le conduit réchauffeur R de manière à l'insérer dans une étape E5 dans le logement creux Q.

Le conduit réchauffeur R est alors maintenu en place dans le logement creux Q. Pour cela, l'opérateur applique, dans une étape E6, une bande de ruban adhésif S au niveau des canalisations 1, 2 qui sont ainsi reliées de manière intime au conduit réchauffeur R.

Lors de son utilisation, le conduit réchauffeur R ainsi monté dans l'organe de guidage 4 est plaqué contre le raccord de liaison 3, ce qui permet un transfert de chaleur amélioré au niveau du raccord de liaison 3. De plus, un tel procédé permet avantageusement un positionnement simple et rapide du raccord de liaison 3 et du conduit réchauffeur R, sans nécessiter d'outillage supplémentaire ni de pièce rapportée.

Dans le cas d'un organe de guidage 4 comprenant deux pattes de guidage 41, 42, présentant une forme en L, au cours de l'étape de positionnement E3 du conduit réchauffeur R en vis-à-vis de l'organe de guidage 4, l'opérateur pousse le conduit réchauffeur R de manière à le positionner contre les bords obliques des pattes de guidage 41, 42. Dans le cas de bords droits, il va de soi que l'opérateur pourrait tout aussi bien ouvrir chaque patte de guidage 41, 42 manuellement ou faire entrer le conduit réchauffeur R en force dans le logement creux Q.

Les deux pattes de guidage 41, 42 sont alors écartées l'une de l'autre, dans une étape d'écartement E4, de manière à ménager une ouverture de passage permettant l'accès au logement creux Q.

Lors de l'étape d'insertion E5 du conduit réchauffeur R dans le logement creux Q, les deux pattes de guidage 41, 42 reviennent à leur position initiale du fait de leur élasticité, de manière à placer les parois de fond 41B, 42B et les parois latérales 41A, 42A autour du conduit réchauffeur R. Le conduit réchauffeur R est alors retenu par les pattes de guidage 41, 42 qui le soutiennent.

Chaque étape du procédé peut être répétée pour chaque jonction entre deux canalisations dans un circuit de fluide complet d'un aéronef, comportant à ce titre une pluralité de canalisations mises bout à bout et initialement solidarisées à la structure de l'aéronef.

## Revendications

1. Circuit de fluide (C), en particulier pour aéronef, comprenant au moins une première canalisation (1), une deuxième canalisation (2) et un raccord de liaison (3), chaque canalisation (1, 2) comportant une extrémité de connexion (11, 21) et s'étendant selon un axe X, le raccord de liaison (3), monté mobile entre les deux canalisations (1, 2), étant configuré pour relier mécaniquement les deux extrémités de connexion (11, 21), le raccord de liaison (3) étant **caractérisé en ce qu'**il comprend un fourreau de liaison (32) et un organe de guidage (4) formé sur une surface extérieure du fourreau de liaison (32), l'organe de guidage (4), définissant un logement creux (Q), étant configuré pour coopérer avec un conduit réchauffeur (R) de manière à le guider entre les deux canalisations (1, 2), le conduit réchauffeur (R) étant configuré pour transmettre de la chaleur aux canalisations (1, 2) et au raccord de liaison (3) afin d'éviter leur givrage.

2. Circuit de fluide (C) selon la revendication 1, dans lequel l'organe de guidage (4) du raccord de liaison (3) est issu de matière du fourreau de liaison (32).

3. Circuit de fluide (C) selon l'une des revendications 1 et 2, dans lequel le raccord de liaison (3) comprenant un organe d'étanchéité (31), destiné à s'étendre entre les extrémités de connexion (11, 21) des canalisations (1, 2), l'organe d'étanchéité (31) étant positionné intérieurement audit fourreau de liaison (32) , ledit organe d'étanchéité (31) comprend un élément de positionnement (34) s'étendant en saillie du fourreau de liaison (32) dans le logement creux (Q) de l'organe de guidage (4), de manière à être en contact direct avec le conduit réchauffeur (R).

4. Circuit de fluide (C) selon l'une des revendications 1 à 3, dans lequel l'organe de guidage (4) du raccord de liaison (3) comprend au moins une première patte de guidage (41) et une deuxième patte de guidage (42).

5. Circuit de fluide (C) selon la revendication 4, dans lequel au moins la première patte de guidage (41) est configurée pour s'étendre latéralement par rapport au conduit réchauffeur (R).

6. Circuit de fluide (C) selon l'une des revendications 4 et 5, dans lequel la deuxième patte de guidage (42) est montée en vis-à-vis de la première patte de guidage (41), de manière à former le logement creux (Q) entre la première patte de guidage (41) et la deuxième patte de guidage (42).

7. Circuit de fluide (C) selon l'une des revendications 4 à 6, dans lequel au moins la première patte de guidage (41) présente une forme en L.

8. Circuit de fluide (C) selon l'une des revendications 4 à 7, dans lequel la première patte de guidage (41) et la deuxième patte de guidage (42) sont configurées pour s'écarter l'une de l'autre de manière élastique, de manière à permettre l'insertion du conduit réchauffeur (R).

9. Ensemble d'un circuit de fluide (C) selon l'une des revendications 1 à 8 et d'un conduit réchauffeur (R), monté dans ledit logement creux (Q) de l'organe de guidage (4) du raccord de liaison (3).

10. Procédé de mise en place d'un conduit réchauffeur (R) dans un circuit de fluide (C) selon l'une des revendications 1 à 8, ledit procédé comprenant :
• une étape de fixation (E2) du raccord de liaison (3) entre les extrémités de connexion (11, 12) des canalisations (1, 2), et
• une étape d'insertion (E5) du conduit réchauffeur (R) dans le logement creux (Q) de l'organe de guidage (4), de manière à permettre une coopération intime entre le raccord de liaison (3) et le conduit réchauffeur (R).

## Patentansprüche

1. Fluidkreislauf (C), vor allem für ein Fluggerät, der mindestens ein erstes Rohr (1), ein zweites Rohr (2) und eine Anschlussarmatur (3) umfasst, wobei jedes Rohr (1, 2) ein Verbindungsende (11, 21) aufweist und sich gemäß einer Achse X erstreckt, wobei die Anschlussarmatur (3), die zwischen den zwei Rohren (1, 2) beweglich angebracht ist, ausgelegt ist, um die zwei Verbindungsenden (11, 21) mechanisch zu verbinden, wobei die Anschlussarmatur (3) **dadurch gekennzeichnet ist, dass** sie eine Verbindungshülle (32) und ein Führungsorgan (4) umfasst, das auf einer äußeren Oberfläche der Verbindungshülle (32) ausgebildet ist, wobei das Führungsorgan (4), das eine hohle Aufnahme (Q) definiert, ausgelegt ist, um mit einem Heizkanal (R) derart zusammenzuwirken, dass er zwischen zwei Rohren (1, 2) geführt wird, wobei der Heizkanal (R) ausgelegt ist, um Wärme an die Rohre (1, 2) und an die Anschlussarmatur (3) zu übertragen, um ihre Vereisung zu vermeiden.

2. Fluidkreislauf (C) nach Anspruch 1, wobei das Führungsorgan (4) der Anschlussarmatur (3) aus dem Material der Verbindungshülle (32) ist.

3. Fluidkreislauf (C) nach einem der Ansprüche 1 und 2, wobei die Anschlussarmatur (3) ein Dichtungsorgan (31) umfasst, das bestimmt ist, sich zwischen den Verbindungsenden (11, 21) der Rohre (1, 2) zu erstrecken, wobei das Dichtungsorgan (31) innen in der Verbindungshülle (32) positioniert ist, wobei das Dichtungsorgan (31) ein Positionierungselement (34) umfasst, das sich aus der Verbindungshülle (32) hervorstehend in die hohle Aufnahme (Q) des Führungsorgans (4) derart erstreckt, dass es in direktem Kontakt mit dem Heizkanal (R) ist.

4. Fluidkreislauf (C) nach einem der Ansprüche 1 bis 3, wobei das Führungsorgan (4) der Anschlussarmatur (3) mindestens ein erstes Führungsbein (41) und ein zweites Führungsbein (42) umfasst.

5. Fluidkreislauf (C) nach Anspruch 4, wobei mindestens das erste Führungsbein (41) ausgelegt ist, um sich im Verhältnis zum Heizkanal (R) seitlich zu erstrecken.

6. Fluidkreislauf (C) nach einem der Ansprüche 4 und 5, wobei das zweite Führungsbein (42) gegenüber dem ersten Führungsbein (41) derart angebracht ist, dass zwischen dem ersten Führungsbein (41) und dem zweiten Führungsbein (42) die hohle Aufnahme (Q) gebildet wird.

7. Fluidkreislauf (C) nach einem der Ansprüche 4 bis 6, wobei mindestens das erste Führungsbein (41) eine L-Form aufweist.

8. Fluidkreislauf (C) nach einem der Ansprüche 4 bis 7, wobei das erste Führungsbein (41) und das zweite Führungsbein (42) ausgelegt sind, um sich elastisch voneinander zu spreizen, um das Einsetzen des Heizkanals (R) zu gestatten.

9. Anordnung aus einem Fluidkreislauf (C) nach einem der Ansprüche 1 bis 8 und einem Heizkanal (R), der in der hohlen Aufnahme (Q) des Führungsorgans (4) der Anschlussarmatur (3) angebracht ist.

10. Verfahren zum Platzieren eines Heizkanals (R) in einem Fluidkreislauf (C) nach einem der Ansprüche 1 bis 8, wobei das Verfahren umfasst:
• einen Schritt des Befestigens (E2) der Anschlussarmatur (3) zwischen den Verbindungsenden (11, 12) der Rohre (1, 2), und
• einen Schritt des Einsetzens (E5) des Heizkanals (R) in die hohle Aufnahme (Q) des Führungsorgans (4) derart, dass ein enges Zusammenwirken zwischen der Anschlussarmatur (3) und dem Heizkanal (R) gestattet ist.

## Claims

1. A fluid circuit (C), in particular for an aircraft, comprising at least a first pipe (1), a second pipe (2) and an interconnecting fitting (3), each pipe (1, 2) comprising a connection end (11, 21) and extending along an axis X, the interconnecting fitting (3), movably mounted between the two pipes (1, 2), being configured to mechanically interconnect the two connection ends (11, 21), the interconnecting fitting (3) being **characterized in that** it comprises an interconnecting sleeve (32) and a guide member (4) formed on an outer surface of the interconnecting sleeve (32), the guide member (4), defining a hollow housing (Q), being configured to cooperate with a heater duct (R) so as to guide it between the two pipes (1, 2), the heater duct (R) being configured to transmit heat to the pipes (1, 2) and to the interconnecting fitting (3) in order to avoid icing thereof.

2. The fluid circuit (C) according to claim 1, wherein the guide member (4) of the interconnecting fitting (3) is made of the material of the interconnecting sleeve (32).

3. The fluid circuit (C) according to one of claims 1 to 2, wherein the interconnecting fitting (3) comprises a sealing member (31), for extending between the connection ends (11, 21) of the pipes (1, 2), the sealing member (31) being positioned internally of said interconnecting sleeve (32), said sealing member (31) comprises a positioning element (34) extending protruding from the interconnecting sleeve (32) into the hollow housing (Q) of the guide member (4), so as to be in direct contact with the heater duct (R).

4. The fluid circuit (C) according to one of claims 1 to 3, wherein the guide member (4) of the interconnecting fitting (3) comprises at least a first guide lug (41) and a second guide lug (42).

5. The fluid circuit (C) according to claim 4, wherein at least the first guide lug (41) is configured to extend laterally from the heater duct (R).

6. The fluid circuit (C) according to one of claims 4 and 5, wherein the second guide lug (42) is mounted facing the first guide lug (41), so as to form the hollow housing (Q) between the first guide lug (41) and the second guide lug (42).

7. The fluid circuit (C) according to one of claims 4 to 6, wherein at least the first guide lug (41) is L-shaped.

8. The fluid circuit (C) according to one of claims 4 to 7, wherein the first guide lug (41) and the second guide lug (42) are configured to elastically move apart from each other, so as to allow insertion of the heater duct (R).

9. An assembly of the fluid circuit (C) according to one of claims 1 to 8 and a heater duct (R), mounted in said hollow housing (Q) of the guide member (4) of the interconnecting fitting (3).

10. A method for placing a heater duct (R) in the fluid circuit (C) according to one of claims 1 to 8, said method comprising:
- a step of fastening (E2) the interconnecting fitting (3) between the connection ends (11, 12) of the pipes (1, 2), and
- a step of inserting (E5) the heater duct (R) into the hollow housing (Q) of the guide member (4), so as to allow an intimate cooperation between the interconnecting fitting (3) and the heater duct (R).
